(19) Europäisches Patentamt / European Patent Office / Office européen des brevets

(11) **EP 2 802 920 B1**

(12) **EUROPEAN PATENT SPECIFICATION**

(45) Date of publication and mention
of the grant of the patent:
**01.11.2017 Bulletin 2017/44**

(21) Application number: **12772799.8**

(22) Date of filing: **10.09.2012**

(51) Int Cl.:
*F21K 9/60* (2016.01)     *F21V 13/04* (2006.01)
*G02B 19/00* (2006.01)

(86) International application number:
**PCT/GB2012/052226**

(87) International publication number:
**WO 2013/104878 (18.07.2013 Gazette 2013/29)**

(54) **IMPROVED OPTICAL SYSTEMS AND LED LUMINAIRES**

VERBESSERTE OPTISCHE SYSTEME UND LED-LEUCHTEN

SYSTÈMES OPTIQUES ET LUMINAIRES À LED AMÉLIORÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2012 CN 201210009353
16.03.2012 CN 201220100839 U
16.03.2012 CN 201220100830 U**

(43) Date of publication of application:
**19.11.2014 Bulletin 2014/47**

(73) Proprietor: **Aurora Limited
St Albans, Hertfordshire AL4 0JJ (GB)**

(72) Inventor: **ZHANG, Yong
Dongguan Municipality
Guangdong 523927 (CN)**

(56) References cited:
**WO-A2-2005/050710     CN-Y- 201 335 320
US-A1- 2009 128 921     US-A1- 2009 219 716**

## Description

### Field of the Invention

The present invention relates to a new type of lens and, especially, a lens which can substantially boost light efficiency for LED luminaires.

### Background to the Invention

As a new type of competitive solid light source in the 21st century, the LED light features the following advantages: high efficiency, pure light colour, low energy consumption, long life span, reliability and durability, pollution-free and flexibility in control. With ever improved LED technology, the luminous flux and light efficiency of LED luminaires will be enhanced continuously. Luminous flux from a single white light LED has currently reached above the 2000 lm level. Illuminating systems with LEDs as the luminaires are growing rapidly in number. The light coming from an LED chip is projected in a Lambertian distribution. Such an optical field distribution, in most circumstances, is hardly able to meet the performance requirements when being used in light fittings, if it is applied without being processed by an appropriate optical system. Therefore, it is strictly necessary for an illuminating system with LED luminaires to include a secondary optical design.

A secondary optical design can form a luminous spot with uniform illumination in a target area so that the lighting system can bring about uniform lighting. Lighting systems are generally classified into the reflecting type, the refracting type and the reflection-refraction hybrid type. Amongst them, the hybrid type mainly adopts TIR (total internal reflection) technology. As the scope of the emergent light from an LED is wide, generally speaking, a reflecting or refracting type is hardly able to control all emergent light of an LED. On the other hand, TIR technology can give full play to refraction and total reflection, and efficiently gathers most of the emergent light from an LED and controls distribution of light beams, so that a compact structure for the lighting system is ensured.

Existing LED lens of reflection types have a low reflectivity, which is usually at 80%. Due to the limitations, such as the lens diameter, LED lens of refraction types have a transmittance as low as 90%. Existing reflection-refraction hybrid types of LED lens generally have separate refraction and reflection parts, which increases the technical costs and processing procedures of LED lamps. Moreover, the reflection surface of the existing reflection part requires reflecting a coating, such as an aluminized coating, which also increases the technical costs of LED lamps. CN 101943368 A, as shown by Figure 10, is an LED condensing lens. Although this condensing lens has two refraction grooves, the lens does not have a reflection surface design. US 2009/0128921 A1 discloses an optical system comprising the features recited in the preamble of claim 1.

### Summary of the Invention

According to a first aspect of the present invention there is provided an optical system for an LED luminaire according to Claim 1.

This type of optical system construction, which is preferably formed from one piece of material with a refractive index greater than that of air to encourage total internal reflection, causes light from the LED luminaire to be focussed into a beam of light that causes less dazzle than a conventional optical system.

The reflecting facets cover substantially the whole outer surface of the conical body. Preferably the bottom or inner surface of the indentation in the first end of the conical body is non-planer. This results in more light being directed onto the reflecting facets on the outer surface of the optical system by reflection or refraction than would otherwise be the case.

Preferably the bottom surface of the indentation comprises a plurality of lens surfaces adapted to spread out any light falling on the bottom surface of the indentation.

Preferably the plurality of lens surfaces takes the form of a series of convex protrusions, and more preferably takes the form of multiple convex reflecting surfaces connected in sequence around the outer surface of the cone. Other forms of reflecting surface can be used in this context including, but not limited to, cambered surfaces, plane surfaces, rhombus surfaces, diamond surfaces, or any other shapes which can achieve desired effect of reflecting light from the LED luminaire out of the second end of the conical body.

Preferably the radius of the reflecting surfaces gradually increases from the first end of the cone to the second end of the cone.

Preferably the plurality of reflecting lens surfaces are arranged in layers about the primary axis of the cone and more preferably the radius of these reflection surfaces connected in sequence increases gradually from the first end to the second end of the conical body. The term "radius" has a broad meaning in this context and includes the distance across a reflecting facet which is not generally circular.

The optical system further comprises an indentation or groove in the second end of the conical body. This second indentation causes more light which would otherwise be transmitted directly out of the optical system to be reflected or refracted onto the outer reflecting surface of the conical body.

Preferably the optical system further comprises one or more LED luminaires.

According to a second aspect of the present invention there is provided an LED light fitting incorporating a secondary optical system according to the first invention.

The reflection surface lens proposed in this invention incorporates the reflection function into an ordinary refraction lens, which achieves good reflection effect without the need for the application of reflective coating, which simplifies the construction of LED lamps. Moreover, the reflection surface lens in this invention can be moulded as one piece, because it has a simpler structure compared with the existing refraction-reflection hybrid lens. The reflection surface, which has been divided into multiple sections, can make a better and more efficient use of the light emitted from an LED.

The invention adopts a technical scheme as follows. In the reflection surface lens, a first refraction groove or indentation and a second refraction groove or indentation, which are positioned on two opposite ends of the reflection lens, are set on the same central axis. The said lens features a translucent shell and is of a cone-shaped appearance. The cone mouth points from the first refraction groove to the second refraction groove. The outer surface is designed to have multiple reflection sections.

In this description the term 'cone' has a broad meaning and includes a frustum shape or a frustoconical shape, or any generally horn shaped structure. The external surface of the cone is generally multi-faceted.

When the LED light source is placed at the first refraction groove, the light emitted from the LED is refracted by the first refraction groove and then is projected from the cone mouth at the second refraction groove. Meanwhile, the light which gets through the translucent lens shell is refracted by the multi-section reflection surface and then is also projected from the cone mouth. The LED emitted from the reflection surface lens in this invention can achieve various desired illumination effects, which cannot be achieved by the traditional LED lens.

Furthermore, the above stated multi-section reflection surface is formed by multiple circles of reflection surfaces connected in sequence in the shape of a cone. That is, in the direction from the first refraction groove to the second refraction groove, radius of reflection surfaces connected in sequence increases gradually to form a cone shape. In a better design, each circle of reflection surface is formed by multiple reflection units connected in sequence. A reflection unit may have various shapes, including but not limited to cambered surface, plane surface, rhombus surface, diamond surface, or any other shapes which can achieve desired effects. Specific shape should be designed in accordance with refraction and reflection effects and the energy conservation law.

The reflection lens in this invention is moulded into one body, with a simple structure. It exerts a reflection function without any reflective coatings; this facilitates the installation of LED lamps. The multi-section reflection surface on the outer surface of the translucent shell achieves good condensing and reflecting effects, which offers various desired illumination effects of LED lamps.

In summary, in this invention, the first refraction groove and the second refraction groove, which are located on two opposite ends of the reflection lens, are set on the same central axis. The said lens features a translucent shell and is of a horn-shaped appearance. The horn or cone-shaped mouth points from the first refraction groove to the second refraction groove. The outer surface is designed to have multiple reflection sections. When the LED light source is positioned at or in the first refraction groove, the light emitted from LED is refracted by the first refraction groove and then is sent out from the cone mouth at the second refraction groove. Meanwhile, the light which gets through the translucent lens shell is refracted by the multi-section reflection surface and then is also projected from the cone mouth. The reflection surface lens in this invention integrates multiple functions within the one body including focusing, refraction and reflection, which allows uniform illumination and other desired illumination effects without the need for any reflective coating. It simplifies the processing technique of LED illumination systems and reduces processing costs.

## Brief Description of the Drawings

Figure 1 illustrates the distribution curve of the relative light intensity of an LED chip;
Figure 2 illustrates the structural principles of the reflection surface lens in the invention;
Figure 3 illustrates the illumination of incident light source on the target plane in the invention;
Figure 4 illustrates the design principles of the multi-section reflection surface in the invention;
Figure 5 is the section view of example 1 not constituting an embodiment of the invention;
Figure 6 is the simulated effect diagram of lens illumination data in example 1;
Figure 7 is the simulated curve diagram of lens illumination data in example 1;
Figure 8 is the front perspective schematic diagram of the structure of implementation example 2 in the invention;

Figure 9 is the schematic diagram of the outer surface structure of implementation example 2 in the invention;
Figure 10 is the schematic diagram of LED condensing lens structure with existing technology;
Figure 11 is a diagrammatic cross-section view of an optical system;
Figure 12 is a plan view of an optical system according to Figure 11;
Figure 13 is a diagrammatic cross-section view of an optical system;
Figure 14 is a plan view of the optical system of Figure 13.

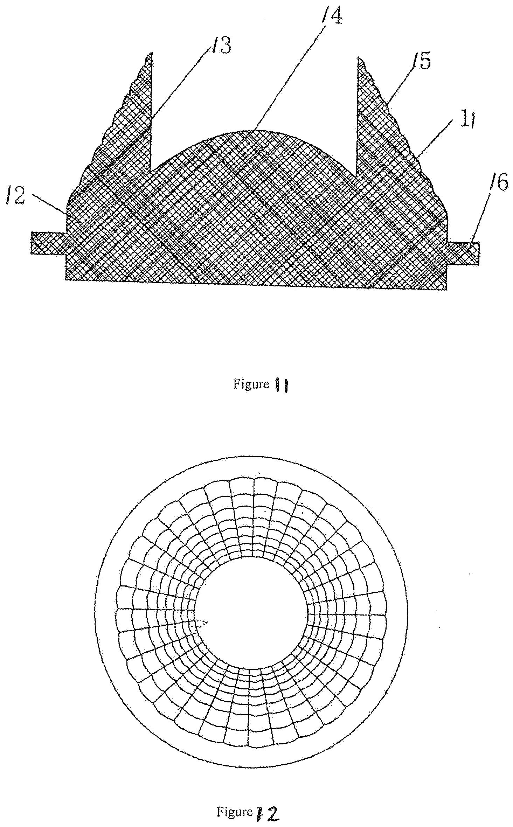

In Figures 11 and 12, the numbers respectively represent:

11 - Frustum
12 - Cylinder
13 - Cylindrical groove
14 - Spherical surface
15 - Spherical facets
16 - Cylinder.

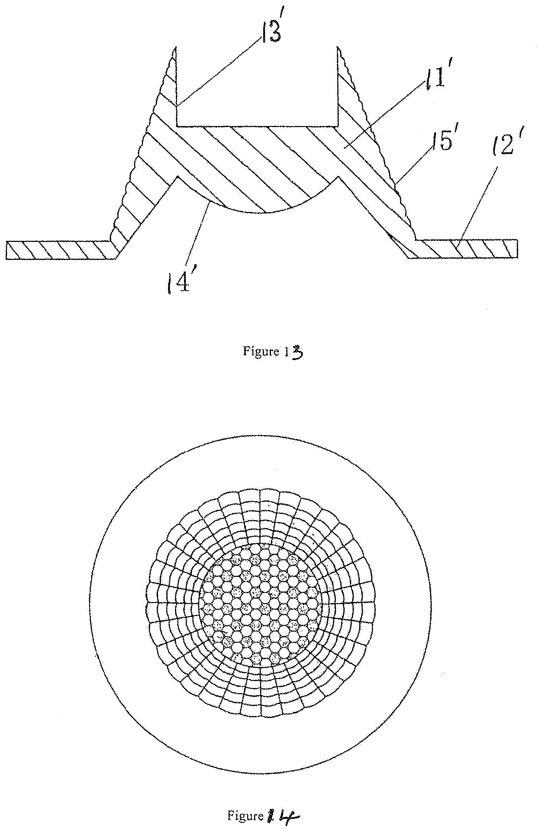

In Figures 13 and 14 the numbers respectively represent:

11' - Frustum
12' - Circular ring
13' - Cylindrical groove
14' - Spherical surface
15' - Spherical facets.

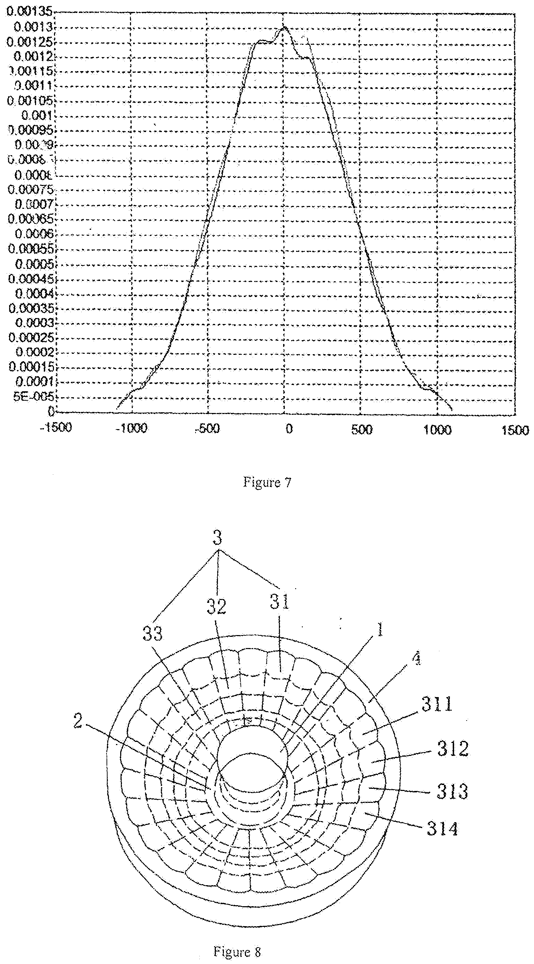

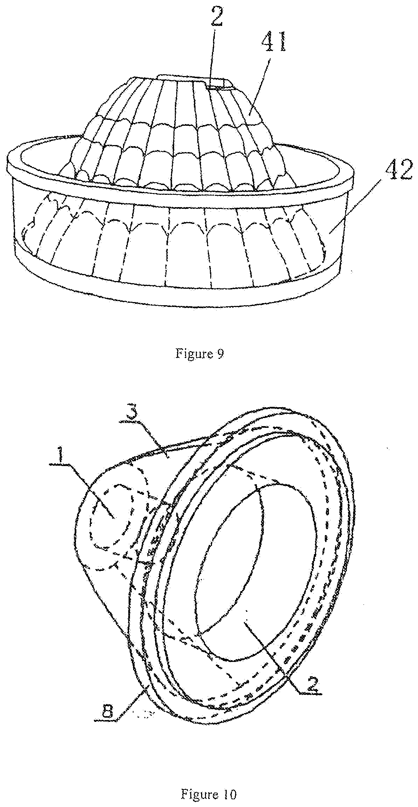

In the Figures 8 and 9 the numbers respectively represent: 1. first refraction groove; 2. second refraction groove; 3. multi-section reflection surface; 4. lens shell; 41. lens outer surface; 42. dependant edge.

## Description of the preferred embodiments

The following description along with the figures and application examples are given by way of example only and shall not be used to limit the derivative types of this invention.

As shown in Figure 8 and Figure 9, the first refraction groove 1 and the second refraction groove 2 are respectively set on both ends of the reflection lens, which are on the same central axis and are both in a cylindrical shape. Lens shell 4 is translucent and outer surface 41 is in a cone shape. The cone mouth points from the first refraction groove 1 to the second refraction groove 2. Reflection surface in multiple sections 3 is set on the outer surface 41.

When an LED is positioned in the first refraction groove 1, the light emitted from it is refracted by the first refraction groove 1 and projected through the cone mouth where the second refraction groove 2 is located. The light which gets through the lens shell 4 is reflected by the multi-section reflection surface 3 in a cone shape and is also projected through the cone mouth. The said translucent material may be silica gel, PMMA, PC, glass or other types of translucent materials, such as semi-transparent materials, which are not limited to the translucent materials described above.

In an important embodiment the bottom surface of the indentation or groove in the first end of the conical body is non-planer. This results in more light being reflected or refracted onto the reflecting facets on the outer surface of the optical system by reflection or refraction than would otherwise be the case. By way of example, the groove can take the form of a cylindrical indentation and the bottom surface of the indentation comprises a plurality of lens surfaces adapted to spread out any light falling on the bottom surface of the indentation. In appearance these may look like a series of pimples arranges on the bottom surface of the indentation when viewed from the first end of the optical system.

In addition or as an alternative, similar lens surfaces can also be provided associated with the indentation or groove in the second end of the conical body.

In the implementation example, the multi-section reflection surface 3 is formed by multiple circles of reflection surfaces connected in sequence in the shape of a cone, such as reflection surfaces 31, 32 and 33 as shown in Figure 8. That is, in the direction from the first refraction groove to the second refraction groove, the radius of reflection surfaces connected in sequence increases gradually to form a cone shape. For example, the radius of reflection surface 33 is smaller than the radius of reflection surface 32 while the radius of reflection surface 32 is smaller than the radius of reflection surface 31. Each circle of reflection surface is formed by multiple reflection units connected in sequence. A reflection unit may have various shapes, including but not limited to, cambered surface, plane surface, rhombus surface, diamond surface, or any other shape which can achieve the desired effects. For example, reflection surface 31 in Figure 8 is formed by arc-shaped reflection units 311, 312, 313 and 314.

The surface shape of each reflection unit can be designed in accordance with the reflection and refraction effects of the desired light and the energy conservation law. Design methods of the reflection unit surface shape are described in detail as follows.

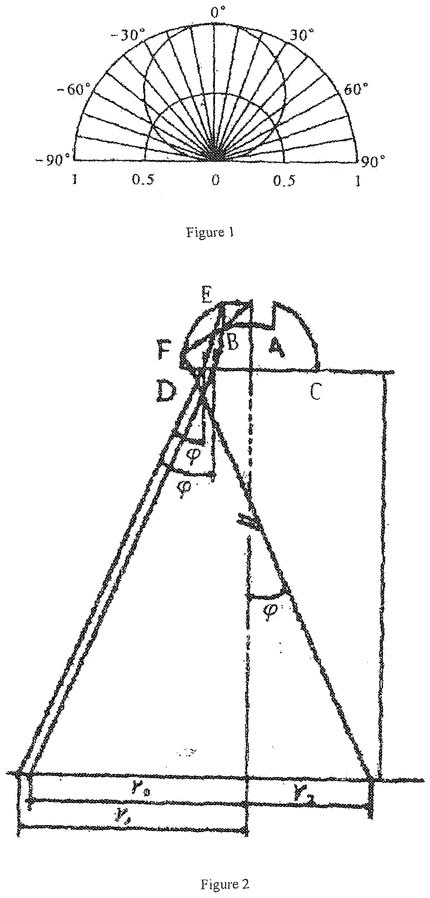

An LED chip can be seen as a Lambertian light source with emitted light in cosine distribution. As shown in the distribution curve of the relative light intensity of an LED chip in Figure 1, the horizontal axis is light intensity; while the vertical axis is the radiation angle. If the Lambertian light intensity distribution of an LED chip is known, then the light intensity in a given direction should be as follows:-

$$I_\theta = I_0 \cos(\theta) \qquad (1)$$

In the formula, $I_\theta$ is the light intensity of the light surface in the direction of the normal; $I_0$ is the light angle in any angle $\theta$ formed with the normal. As an LED chip is a Lambertian light source, its luminance in all directions is a constant, i.e.:-

$$L_\theta = \frac{I_\theta}{dA\cos(\theta)} = \frac{I_0\cos(\theta)}{dA\cos(\theta)} = \frac{I_0}{dA} = L \qquad (2)$$

In the formula, dA is the element area of light surface. L is a constant which stands for the chip luminance. The luminous flux in a three dimensional angle range with the aperture angle $\theta$ is shown in the following formula:

$$\varphi(\theta) = \int_{\varphi=0}^{\varphi=2\pi} d\varphi \int_{\gamma=0}^{\gamma=\theta} I_\gamma \sin(\gamma) d\gamma = \pi L dA \sin^2(\theta) \qquad (3)$$

As shown in Figure 1, when the light emitted from the LED chip covers half a sphere, i.e., $\theta=\pi/2$, the total luminous flux of the chip is calculated as follows.

$$\varphi(\frac{\pi}{2}) = \pi I_0 \qquad (4)$$

The reflection surface lens in the invention can meet the requirements of the given emitting angles and achieves various illumination effects in a specific zone. The principles of the lens structure are shown in Figure 2.

The lens is designed in the following way. Certain points on the curve surface AB and the multi-section reflection surface EF are obtained in accordance with the illumination distribution of the target plane and the energy conservation law. These points are then integrated and rotated to obtain the refraction curve surface AB and the rhombus reflection surface EF.

**I. Design of the Refraction Surface**

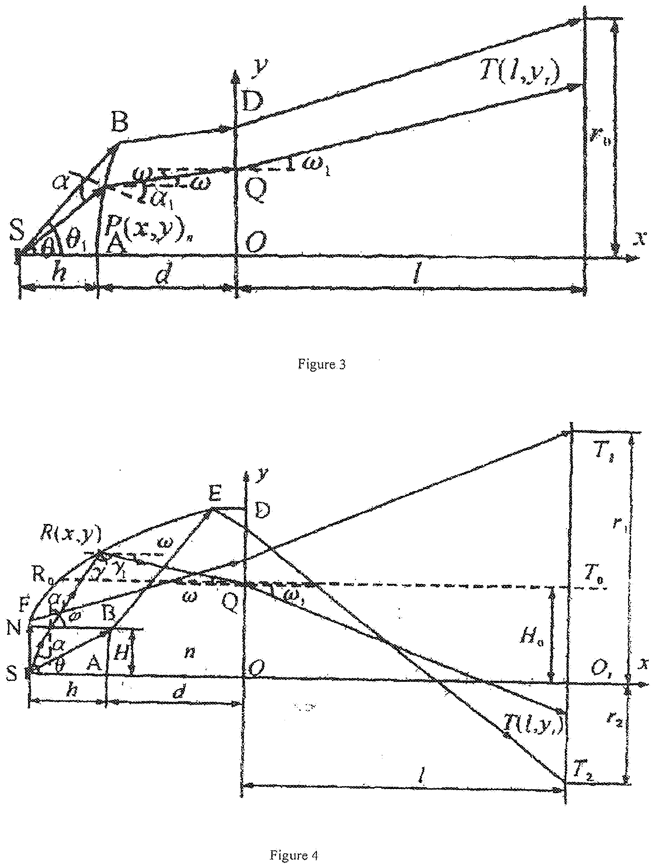

Based on the above analysis, the light which is emitted from the light source and falls on the curve surface AB provides a uniform illumination with a radius of r0 on the target plane through the lens as shown in Figure 3. The radius r0 can be obtained from the given maximum included angle $\psi$ between the emitted light and the light axis and distance l, i.e.

$$r_0 = l \tan(\psi) \qquad (5)$$

The luminance of uniform illumination formed on the target plane by the light which is emitted from the light source and falls on the curve surface AB is calculated in accordance with the energy conservation law.

$$E_1 = \frac{LA\sin(\theta_1)}{r_0^2} \quad (6)$$

In the formula, L is the luminance of the light source, A is the area of the light source, $\theta_1$ is the aperture angle of the light emitted from the light source centre corresponding to point B. The value of $\theta_1$ should ensure that the vertical coordinates of point B is at least 5 times of the maximum size of the light source.

The light emitted from the light source centre with an aperture angle of $\theta$ falls on point P on the curve surface AB and then falls on point T on the target plane through the lens. The vertical coordinates of point T is calculated in accordance with the energy conservation law as follows.

Then, $\omega$ is obtained to satisfy the following equation:

$$y_t = \frac{ln\sin(\omega)}{\sqrt{1 - n^2\sin^2(\omega)}} \quad (8)$$

The derivative of the curve surface AB at point P is calculated in the following formula.

$$\frac{dy}{dx} = -\frac{n\cos(\omega) - \cos(\theta)}{n\sin(\omega) - \sin(\theta)} \quad (9)$$

Considering $\frac{dy}{dx} = \frac{dy}{d\theta} \times \frac{d\theta}{dx}$ and y= (b+d+x)tan(0), the derivative of $\theta$ is obtained in combination with formula (9).The ordinary differential equation of x and $\theta$ is as follows:

$$\frac{dx}{d\theta} = \frac{h + d + x}{\left[-\dfrac{n\cos(\omega) - \cos(\theta)}{n\sin(\omega) - \sin(\theta)} - \tan\theta\right]\cos^2\theta} \quad (10)$$

In the formula, h and d have a meaning as shown in Figure 3. The value of h should be at least 5 times the maximum size of the light source. $\omega$ is the root of equation (8). The initial condition of the ordinary equation is $\theta=0$, x=-d. Solve the ordinary differential equation with Runge-Kutta to obtain a series of points on the curve AB.

**II. Design of the Total Reflection Surface**

To simulate the multi-section reflection surface, we divided the multi-section reflection surface EF into two parts (as an example), $R_0E$ and $R_0F$. As shown in Figure 4, the light which is emitted from the light source and falls on the curve surface $R_0E$ forms a uniform illumination with a radius of $r_2$ through the lens. The light which is emitted from the light source and falls on the curve surface $R_0F$ forms a uniform lamination with a radius of $r_1$ through the lens. After overlapping, the light which is emitted from the light source and falls on the multi-section reflection surface forms a uniform illumination with a radius of $r_1$ on the target plane through the lens.

Based on the analysis above, the luminance of the uniform illumination corresponding to the reflection surface $R_0E$ and the reflection surface $R_0F$ should be equal. In accordance with the energy conservation law, the light which is emitted from the light source and falls on the reflection surface $R_0E$ (or the reflection surface $R_0F$) forms a luminance with uniform illumination on the target plane as shown in the following formula:

$$E_2 = \frac{LA\left[\sin^2(\theta_2) - \sin^2(\theta_1)\right]}{r_1^2 + r_2^2} \quad (11)$$

In the formula, $r_1 = r_0+H_0$, $r2 = r_0-H_0$, where $H_0$ is the vertical coordinates of $R_0$, its value should ensure that point F is above the line segment BN. $\theta_2$ is the maximum included angle between the light emitted from the light source and the light axis.

Figure 4 shows the design principles of the multi-section reflection surface. The light emitted from the light source centre with an aperture angle of $\theta$ falls on point R on the multi-section reflection surface EF and then reaches point T on the target surface through the lens. The vertical coordinates of point T ($Y_T$) can be obtained in accordance with the energy conservation law.

Place point R on the multi-section reflection surface $R_0F$. Now point T is positioned on the line segment $T_0T_1$. The vertical coordinates of point T is as follows:-

$$y_t = \sqrt{H_0^2 + \frac{LA[\sin^2(\theta_2) - \sin^2(\theta)]}{E_2}} \tag{12}$$

When point R is positioned on the multi-section reflection surface $R_0E$ and point T is positioned on the line section $Q_1T_0$, The vertical coordinates of point T is as follows.

$$y_t = \sqrt{H_0^2 + \frac{LA[\sin^2(\theta_3) - \sin^2(\theta)]}{E_2}} \tag{13}$$

In the formula, $\theta_3$ is the aperture angle of the light emitted from the light source corresponding to point $R_0$. If point T is positioned on the line segment $Q_1T_2$, the vertical coordinates of point T is as follows:-

$$y_t = -\sqrt{\frac{LA[\sin^2(\theta_3) - \sin^2(\theta)]}{E_2} - H_0^2} \tag{14}$$

Based on the vertical coordinates of point T, $\omega$ is obtained to satisfy the following equation.

$$y_t = \frac{ln\sin(\omega)}{\sqrt{1 - n^2\sin^2(\omega)}} \tag{15}$$

The reciprocal (*derivative*) of the multi-section surface EF at point R is as follows:-

$$\frac{dy}{dx} = \frac{\cos(\varphi) - \cos(\omega)}{\sin(\omega) - \sin(\varphi)} \tag{16}$$

Considering $\frac{dy}{dx} = \frac{dy}{d\theta} \times \frac{d\theta}{dx}$ and y = H+(h+d+x-H/tan $\theta$), tan$\Phi$ and $\theta$ are obtained. Based on formula (16), X and $\theta$ are obtained to satisfy the following ordinary differential equation:-

$$\frac{dx}{d\theta} = \frac{\frac{H\sqrt{n^2 - \cos^2(\theta)}}{\sin^2(\theta)\cos(\theta)} + [h + d + x - \frac{H}{\tan(\theta)}]\frac{n^2\sin(\theta)}{\cos^2(\theta)\sqrt{n^2 - \cos^2(\theta)}}}{\frac{\cos(\theta) - n\cos(\omega)}{n\sin(\omega) - \sqrt{n^2 - \cos^2(\theta)}} - \frac{\sqrt{n^2 - \cos^2(\theta)}}{\cos(\theta)}} \tag{17}$$

In the formula, H is the vertical coordinates of point B, $\omega$ is the root of equation (15). The initial condition of the ordinary differential equation is $\theta=\theta_3$, $x=x_0$, and $x_0$ is the horizontal coordinates of point $R_0$. Solve the ordinary differential equation by using Runge-Kutta to obtain points on the multi-section reflection surface EF.

The above describes the multi-section reflection surface EF which is divided into two sections. It can also be divided into infinite sections by the same principle.

Example 1

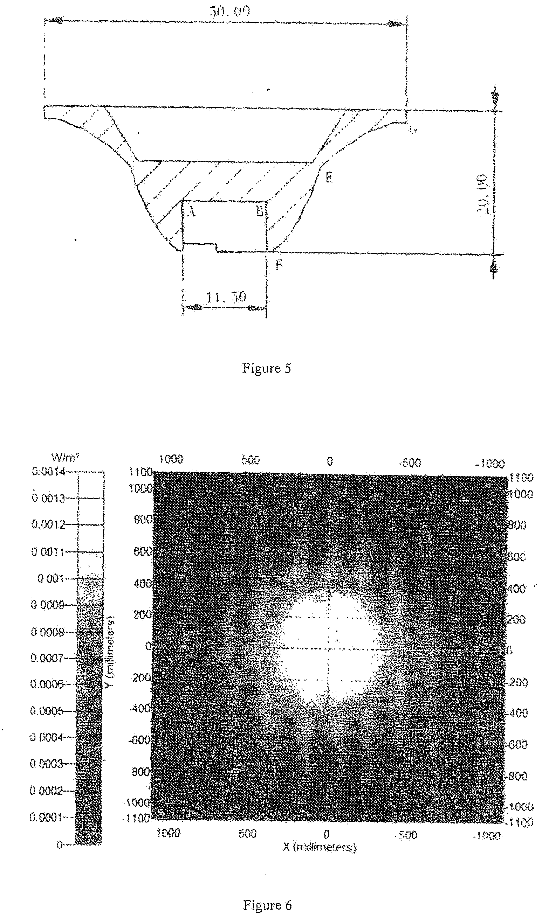

Example 1 shown in Figure 5 adopts an LED chip of 1 mmx1 mm as the light source whose luminous flux is 135lm. Its light source gets through the lens and then forms a divergence angle of 65°. The lens material is polymethyl methacrylate (PMMA) and is of a multi-section reflection surface design with its detailed dimensions shown in Figure 5. The multi-section reflection surface 3 as designed in the method stated above includes two arc line segments, i.e., the curved reflection surface EF and the curved reflection surface FG. Each arc line segment can also be designed with multi-section arcs. The software programme TracePro can be used to obtain the simulation light diagram and simulation data as shown in Figure 6 and Figure 7.

**Example 2**

In implementation Example 2 shown in Figure 8 and Figure 9, the whole reflection surface lens is moulded from translucent material in one piece. The inside of the cone mouth is also solid and translucent. The first refraction groove 1 in a cylindrical shape is positioned within the cone mouth and its central axis is overlapped with the central axis of the cone. That is, the first refraction groove 1 is set exactly in the middle of the cone mouth. The second refraction groove 2 in a cylindrical shape is set on the back of the reflection surface lens. It is overlapped with the central line of the first refraction groove, but they are not connected with each other. The multi-section surface 3 positioned on the outer surface of the reflection surface lens is formed by reflection surfaces 31, 32 and 33. Following the direction from the first refraction groove 1 to the second refraction groove 2, the radius of these reflection surfaces connected in sequence increases gradually. Meanwhile, surfaces 31, 32 and 33 are respectively formed by several reflection units 311, 312, 313 and 314 which are connected in sequence. Reflection units 31, 32 and 33 are all arc surfaces. Dot matrix on each arc surface is calculated in accordance with the method stated earlier.

The invention proposes a design concept of uniform illumination from a new high-power LED with multi-section reflection surfaces and establishes the ordinary differential equation in accordance with the luminous feature of LEDs and the energy conservation law. The equation is used to obtain the coordinates of a series of points on the multi-section reflection surface in order to create the multi-section reflection surface on the reflection surface lens. The multi-section reflection surface makes use of the light emitted from the LED in a better and more effective way. The new reflection surface lens improves efficiency of LEDs and ensures uniformity of the output light and various desired illumination effects. With the efficient control and use of the light, the new optical reflection surface lens perfectly meets the requirements for high efficiency and environment protection as well as the requirements for diversity and diversification in the current illumination market. An example is shown in Figures 11 and 12, in which the optical system consists of a frustum (11) in the upper part and a cylinder (12) in the lower part, which are both (11 and 12) made of PMMA (polymethyl methacrylate). The frustum (11) and the cylinder (12) are integrated into one body. The upper end of the frustum includes a cylindrical groove (13) and inside the groove (13) there is a convex spherical surface (14) bulging upwards; the outer sidewall is covered with spherical facets (15), which are of the same dimensions along the same horizontal circle and their (15) areas decrease progressively from the bottom upwards. The said cylinder's sidewall also has a protruding cylinder (16).

Refracted by the cylindrical groove (13) in the upper end of the frustum (11) and reflected by the spherical facets (15) covering the outer sidewall of the frustum (11), light emitted from the LED luminaire is finally refracted out by cylinder (12); this not only significantly boosts light usage and efficiency, but also ensures uniformity of the projected light.

A second example is illustrated in Figures 13 and 14. A lens or optical system for LED luminaires according to this embodiment consists of a frustum in the upper part and a circular ring in the lower part, which are both made of PMMA (polymethyl methacrylate). The frustum and the ring are integrated into one body. The upper end of the frustum is a cylindrical groove and in the lower end there is a convex spherical surface bulging downwards. The outer sidewall is covered with spherical facets, which are of the same dimensions along the same horizontal circle and their areas decrease progressively from the bottom upwards.

As can be seen from Figures 13 and 14, this embodiment consists of a frustum (11') in the upper part and a circular ring (12') in the lower part, which are both (11' and 12') made of PMMA (polymethyl methacrylate). The frustum (11') and the ring (12') are integrated into one body. The upper end of the frustum is a cylindrical groove (13') and in the lower end there is a convex spherical surface (14') bulging downwards; the outer sidewall is covered with spherical facets (15'), which are of the same dimensions along the same horizontal circle and their areas preferably decrease progressively from the bottom upwards.

Refracted by the cylindrical groove (13') in the upper end of the frustum (11') and reflected by the spherical facets (15') covering the outer sidewall of the frustum (11'), light emitted from the LED luminaire is finally refracted down the lower part of the frustum. This not only significantly boosts light usage and efficiency, but also ensures uniformity of the projected light.

Beneficial effects of this example include: refracted by the cylindrical groove in the upper end of the frustum and reflected by the spherical facets covering the outer sidewall of the frustum, light emitted from the LED luminaire is finally refracted down the lower part of the frustum. This not only significantly boosts light usage and efficiency, but also ensures uniformity of the projected light.

As a final point it should be noted that the implementation example 2 stated above is only used to exemplify the technical scheme of the invention. It is not intended to limit the scope of the invention. Although the preferred implementation example gives detailed descriptions of the invention, technicians in the related field should understand that modification or equivalent substitution of the technical scheme without going beyond the substance and scope of the invention is feasible.

## Claims

1. An optical system for an LED luminaire said optical system comprising: a substantially conical body (4, 11) formed from a transparent or translucent material, said conical body (4, 11) having a first, narrow end, a second wider end, and an outer surface (41, 14, 14') designed to substantially totally reflect light towards the second end of the conical body (4, 11), said conical body (4, 11) having a primary axis extending from the first end to the second end, an indentation or groove (1, 13, 13') in the first end of the conical body (4, 11) adapted to accommodate an LED luminaire, and an indentation or groove (2) in the second end of the conical body (4, 11), wherein the outer surface (41, 14, 14') of the conical body (4, 11) comprises a plurality of reflecting facets or reflecting surfaces (311, 312, 313, 314, 15, 15'), and wherein said reflecting facets (311, 312, 313, 314, 15, 15') cover substantially the whole outer surface of the conical body (4, 11) **characterised in that** the plurality of reflecting facets on the outer surface of the conical body comprise multiple reflecting surfaces connected in sequence around the outer surface of the conical body (4, 11), and **in that** the indentation or groove (2) in the second end of the conical body (4, 11) takes the form of a cylindrical indentation and the bottom or inner surface of the indentation comprises a plurality of lens surfaces adapted to spread out any light falling on the bottom surface of the indentation.

2. An optical system according to claim 1 wherein the bottom or inner surface of the indentation in the first end of the conical body is non-planer.

3. An optical system according to claim 1 or claim 2 wherein the bottom surface of the indentation in the first end of the conical body comprises a plurality of lens surfaces adapted to spread out any light falling on the bottom surface of the indentation.

4. An optical system according to claim 3 wherein the plurality of lens surfaces take the form of a series of convex protrusions.

5. An optical system according to any preceding claim wherein the radius of the reflecting facets or reflecting surfaces gradually increase from the first end of the conical body to the second end of the conical body.

6. An optical system according to any preceding claim wherein the plurality of reflecting facets or reflecting surfaces are arranged in layers about the primary axis of the cone.

7. An optical system according to any preceding claim further comprising one or more LED luminaires.

8. An LED light fitting including one or more optical systems according to any of claims 1 to 7 inclusive.

## Patentansprüche

1. Optisches System für eine LED-Leuchte, wobei das optische System umfasst: einen im Wesentlichen konischen Körper (4, 11), der aus einem transparenten oder durchsichtigen Material geschaffen ist, wobei der konische Körper (4, 11) ein erstes schmales Ende, ein zweites breiteres Ende und eine äußere Oberfläche (41, 14, 14') aufweist, die dafür entworfen ist, Licht in Richtung des zweiten Endes des konischen Körpers (4, 11) im Wesentlichen totalzureflektieren, wobei der konische Körper (4, 11) eine primäre Achse aufweist, die sich von dem ersten Ende zu dem zweiten Ende erstreckt, eine Vertiefung oder Rille (1, 13, 13') im ersten Ende des konischen Körpers (4, 11), die dafür angepasst ist, eine LED-Leuchte aufzunehmen, und eine Vertiefung oder Rille (2) im zweiten Ende des konischen Körpers (4, 11), wobei die äußere Oberfläche (41, 14, 14') des konischen Körpers (4, 11) eine Vielzahl reflektierender Facetten oder reflektierender Oberflächen (311, 312, 313, 314, 315, 15, 15') aufweist und wobei die reflektierenden Facetten (311, 312, 313, 314, 15, 15') im Wesentlichen die gesamte äußere Oberfläche des konischen Körpers (4, 11) bedecken, **dadurch gekennzeichnet, dass** die Vielzahl von reflektierenden Facetten auf der äußeren Oberfläche des konischen Körpers zahlreiche reflektierende Oberflächen aufweist, die der Reihe nach um die äußere Oberfläche des konischen Körpers (4, 11) verbunden sind, und dadurch, dass die Vertiefung oder Rille (2) im zweiten Ende des konischen Körpers (4, 11) die Form einer zylindrischen Vertiefung einnimmt und die Boden- oder innere Oberfläche der Vertiefung eine Vielzahl von Linsenflächen aufweist, die dafür angepasst sind, etwaiges, auf die Bodenfläche der Vertiefung fallendes Licht zu verteilen.

2. Optisches System nach Anspruch 1, wobei die Boden- oder innere Oberfläche der Vertiefung in dem ersten Ende des konischen Körpers nicht planar ist.

3. Optisches System nach Anspruch 1 oder Anspruch 2, wobei die Bodenfläche der Vertiefung in dem ersten Ende des konischen Körpers eine Vielzahl von Linsenflächen aufweist, die dafür angepasst sind, etwaiges, auf die Bodenfläche der Vertiefung fallendes Licht zu verteilen.

4. Optisches System nach Anspruch 3, wobei die Vielzahl von Linsenflächen die Form einer Reihe von konvexen Erhebungen einnimmt.

5. Optisches System nach einem der vorhergehenden Ansprüche, wobei der Radius der reflektierenden Facetten oder reflektierenden Oberflächen von dem ersten Ende des konischen Körpers zu dem zweiten Ende des konischen Körper allmählich zunimmt.

6. Optisches System nach einem der vorhergehenden Ansprüche, wobei die Vielzahl von reflektierenden Facetten oder reflektierenden Oberflächen in Schichten um die primäre Achse des Konus angeordnet ist.

7. Optisches System nach einem der vorhergehenden Ansprüche, ferner umfassend eine oder mehr LED-Leuchten.

8. LED-Beleuchtungskörper, der ein oder mehr optische Systeme nach einem der Ansprüche 1 bis 7 inklusive enthält.

**Revendications**

1. Système optique pour un luminaire DEL, ledit système optique comprenant un corps sensiblement conique (4, 11) formé d'un matériau transparent ou translucide, ledit corps conique (4, 11) ayant une première extrémité étroite, une seconde extrémité plus large et une surface externe (41, 14, 14') conçue pour réfléchir de manière sensiblement totale la lumière vers la seconde extrémité du corps conique (4, 11), ledit corps conique (4, 11) ayant un axe principal s'étendant de la première extrémité à la seconde extrémité, un indentation ou une rainure (1, 13, 13') dans la première extrémité du corps conique (4, 11) qui est à même de recevoir un luminaire DEL et une indentation ou une rainure (2) à la seconde extrémité du corps conique (4, 11), dans lequel la surface externe (41, 14, 14') du corps conique (4, 11) comprend une pluralité de facettes réfléchissantes ou de surfaces réfléchissantes (311, 312, 313, 314, 15, 15') et dans lequel lesdites facettes réfléchissantes (311, 312, 313, 314, 15, 15') recouvrent sensiblement la totalité de la surface externe du corps conique (4, 11), **caractérisé en ce que** la pluralité de facettes réfléchissantes sur la surface externe du corps conique comprend de multiples surfaces réfléchissantes raccordées en séquence autour de la surface externe du corps conique (4, 11) et **en ce que** l'indentation ou la rainure (2) de la seconde extrémité du corps conique (4, 11) prend la forme d'une indentation cylindrique et la surface inférieure ou interne de l'indentation comprend une pluralité de surfaces de lentilles qui sont à même de diffuser une lumière quelconque tombant sur la surface inférieure de l'indentation.

2. Système optique selon la revendication 1, dans lequel la surface inférieure ou interne de l'indentation de la première extrémité du corps conique est non planaire.

**3.** Système optique selon la revendication 1 ou la revendication 2, dans lequel la surface inférieure de l'indentation de la première extrémité du corps conique comprend une pluralité de surfaces de lentilles qui sont à même de diffuser une lumière quelconque tombant sur la surface inférieure de l'indentation.

**4.** Système optique selon la revendication 3, dans lequel la pluralité de surfaces de lentilles prend la forme d'une série de saillies convexes.

**5.** Système optique selon l'une quelconque des revendications précédentes, dans lequel le rayon des facette réfléchissantes ou des surfaces réfléchissantes augmente graduellement de la première extrémité du corps conique à la seconde extrémité du corps conique.

**6.** Système optique selon l'une quelconque des revendications précédentes, dans lequel la pluralité de facettes réfléchissantes ou de surfaces réfléchissantes est agencée en couches autour de l'axe principal du cône.

**7.** Système optique selon l'une quelconque des revendications précédentes, comprenant en outre un ou plusieurs luminaires DEL.

**8.** Applique de lumière DEL comprenant un ou plusieurs systèmes optiques selon l'une quelconque des revendications 1 à 7 inclusivement.

Figure 1

Figure 2

Figure 3

Figure 4

13

Figure 5

Figure 6

Figure 7

Figure 8

Figure 9

Figure 10

Figure 11

Figure 12

Figure 13

Figure 14

**EP 2 802 920 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 101943368 A
- US 20090128921 A1